# DEMANDE DE BREVET EUROPEEN

(11) **EP 0 565 398 A1**
(43) Date de publication de la demande: **13.10.1993**
(21) Numéro de dépôt: 93400778.2
(22) Date de dépôt: 25.03.1993
(51) Int. Cl.: B60R 16/02

(54) **Dispositif d'eclairage et/ou de signalisation utilisé en situation de brouillard**

(30) Priorité: 31.03.1992 FR 9203886
(71) Demandeur: VALEO VISION, 93012 Bobigny Cédex (FR)
(72) Inventeur: Brassier, Marc, F-94300 Vincennes (FR); Rydel, Charles, F-75019 Paris (FR); Medjaoui, Omar, F-93250 Villemomble (FR)
(74) Mandataire: Lemaire, Marc

(57) **Abrégé**

La présente invention concerne un dispositif d'éclairage et/ou de signalisation utilisé en situation de brouillard. Elle trouve application dans le domaine de l'éclairage et de la signalisation de véhicules routiers.

Selon l'invention, le dispositif comporte un circuit de détection d'humidité (3) et un système de détection de visibilité optique (2) qui sont combinés par un circuit de combinaison (4) de façon à allumer un feu de brouillard (16).

## Description

La présente invention concerne un dispositif d'éclairage et/ou de signalisation utilisé en situation de brouillard. Elle trouve application dans le domaine de l'éclairage et de la signalisation de véhicules routiers.

On sait que la présence de brouillard constitue un risque majeur sur les routes. De ce fait, dans l'art antérieur, on a déjà proposé d'utiliser des dispositifs d'éclairage et/ou de signalisation qui permettent notamment d'améliorer la visibilité en situation de brouillard (fonction éclairage) et d'autre part, d'améliorer la signalisation du véhicule se trouvant en situation de brouillard par rapport aux autres véhicules. Pour cela, on a développé des feux de brouillard dont les caractéristiques optiques permettent aux faisceaux lumineux qu'ils émettent, de traverser les zones de brouillard de façon plus efficace que les dispositifs classiques d'éclairage et/ou de signalisation.

Dans l'art antérieur, l'allumage ou l'extinction du feu de brouillard est commandé manuellement par le conducteur grâce à un commutateur disposé sur le tableau de bord et dont le signal est interprété par une centrale d'éclairage et de signalisation qui gère les feux et projecteurs du véhicule.

Utilisé en l'absence de brouillard, un tel dispositif peut être source de gêne pour les usagers d'autres véhicules, plus particulièrement lorsque le dispositif est un feu de brouillard. De plus, si le dispositif d'éclairage et/ou de signalisation utilisé en situation de brouillard a été oublié, en cas de nécessité, il existe une situation de danger.

C'est pourquoi, dans l'art antérieur, on a aussi proposé des systèmes automatiques qui permettent d'allumer ou d'éteindre un feu de brouillard en fonction des conditions climatiques. En particulier, on a déjà proposé des systèmes optiques constitués par un émetteur-récepteur d'un rayonnement infrarouge de longueur d'onde convenable qui diffuse sur les particules de brouillard. La partie rétrodiffusée du rayonnement infrarouge est détectée, comparée à un seuil de façon à commander l'allumage ou l'extinction du feu de brouillard.

Cependant, la situation de brouillard correspond à des états physiques très variés et les dispositifs précités ne permettent pas une détection facile en toutes circonstances de l'ensemble de situations de brouillard.

L'invention propose un dispositif du type précité, qui permet une détection de situation de brouillard plus fidèle que les dispositifs antérieurs.

Le dispositif d'éclairage et/ou de signalisation utilisé en situation de brouillard selon l'invention, est caractérisé en ce qu'il comporte un circuit de combinaison dont une première entrée est connectée à la sortie d'un dispositif de détection d'humidité relative, et dont une seconde entrée est connectée à la sortie d'un dispositif de détection de visibilité, les deux signaux de détection étant combinés de façon à produire un ordre d'allumage et/ou d'extinction d'au moins un feu de brouillard.

Selon une autre caractéristique de l'invention, l'ordre d'allumage et/ou d'extinction est produit par un circuit d'allumage et/ou une centrale de gestion de l'éclairage et/ou de la signalisation.

Selon une autre caractéristique de l'invention, le dispositif de détection de visibilité comporte un émetteur connecté aux bornes d'une diode d'émission d'infrarouges et un récepteur du rayonnement infrarouge rétrodiffusé reçu par une diode de réception de rayonnement infrarouge.

Selon une autre caractéristique de l'invention, le dispositif comporte des diodes de réception et d'émission qui sont disposées selon une inclinaison prédéterminée de façon à ce que les faisceaux de réception et d'émission se coupent à une distance donnée.

Selon une autre caractéristique de l'invention, le dispositif de détection d'humidité relative comporte un capteur d'humidité disposé dans un logement ou puits, qui débouche dans l'atmosphère ambiante à proximité du dispositif de détection de visibilité.

Selon une autre caractéristique de l'invention, le dispositif est intégré dans un bloc optique.

Selon une autre caractéristique de l'invention, le dispositif de détection d'humidité comporte un capteur constitué par un film polymère utilisé comme diélectrique d'un condensateur, dont la constante diélectrique dépend de l'humidité relative et qui est alimenté par un générateur d'oscillations de période prédéterminée. Le signal de sortie du capteur est comparé au moyen d'un comparateur à une valeur de consigne de valeur prédéterminée, enregistrée ou adaptée en fonction de conditions externes mesurées par un circuit comme le degré de pollution, la température ambiante ou la pression atmosphérique.

Selon une autre caractéristique de l'invention, le dispositif comporte une diode émettrice d'un rayonnement infrarouge connectée par l'intermédiaire d'un amplificateur à une source d'oscillations de période prédéterminée, qui est aussi connectée par une borne à un module de détection synchrone dont l'entrée reçoit le signal de détection de rétrodiffusion obtenu à l'aide d'une diode de réception infrarouge connectée à l'entrée d'un gyrateur, la sortie du module de détection synchrone étant connectée à un comparateur à une valeur de consigne de valeur prédéterminée, enregistrée ou adaptée en fonction de conditions externes mesurées par un circuit comme le degré de pollution, la température ambiante ou la pression atmosphérique.

Selon une autre caractéristique de l'invention, les signaux de comparaison sont combinés par une diode, la combinaison étant fournie comme signal de commande à la grille d'un transistor de puissance dont le drain est connecté à une borne d'alimentation d'un feu de brouillard et dont la source est connectée à la masse par l'intermédiaire d'une résistance.

Selon une autre caractéristique de l'invention, le dispositif comporte des modules de détection d'un défaut de la lampe du feu de brouillard constitués par un comparateur connecté d'une part à la source du transistor de puissance d'autre part, à un circuit constitué d'un condensateur et d'une résistance et dont la sortie est en l'absence de défaut forcée à l'état bas par l'intermédiaire d'une diode connectée à la borne de sortie de comparaison de comparateur d'une part, et d'autre part, par une diode au collecteur d'un transistor dont la base est connectée par l'intermédiaire d'une résistance à la borne d'alimentation d'allumage de la lampe du feu de brouillard, la sortie du comparateur étant connectée par l'intermédiaire d'une résistance à la grille d'un transistor dont le drain est connecté à la borne d'allumage d'une lampe de signalisation de défaut, de façon à ce que cette lampe s'allume lorsque le dispositif détecte une condition de brouillard et que la lampe du feu de brouillard est éteinte.

D'autres caractéristiques et avantages de la présente invention seront mieux compris à l'aide des dessins annexés qui sont :
La figure 1 : un schéma de principe d'un dispositif selon l'invention ;
La figure 2 : un schéma bloc d'un premier mode de réalisation du dispositif de la figure 1 ;
La figure 3 : un mode de réalisation d'une partie du dispositif de la figure 2 ;
La figure 4 : un bloc optique équipé du dispositif selon l'invention ;
Les figures 5a à 5e : les différentes parties d'un schéma du module électronique du dispositif de l'invention.

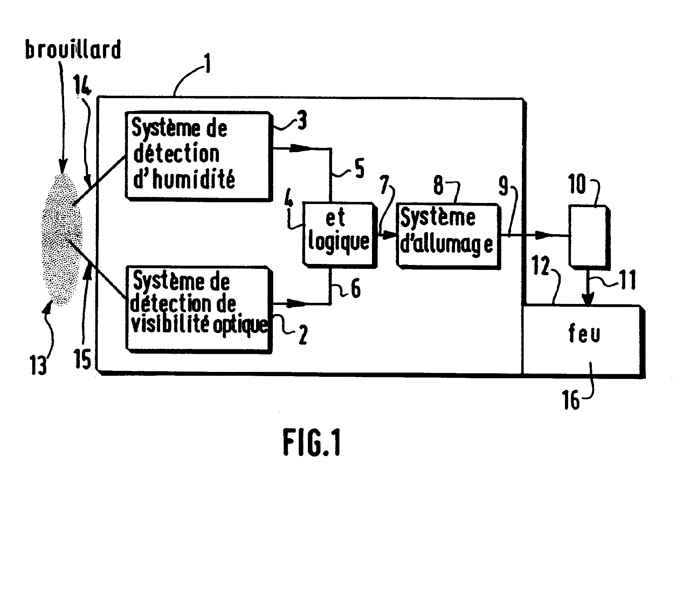

A la figure 1, on a représenté un dispositif 1 selon l'invention, qui comporte principalement un système de détection de visibilité optique 2, et un système de détection d'humidité relative 3. Le système de détection d'humidité comporte un capteur d'humidité qui détecte, par une voie d'entrée 14, l'humidité relative au voisinage du dispositif tandis que le système de détection de visibilité optique 2 utilise une voie d'entrée 15 pour mesurer la visibilité dans le milieu ambiant 13.

Le dispositif comporte aussi un circuit 4 de combinaison des signaux de sortie respectivement 5 et 6 du système de détection d'humidité relative 3 et du système de détection de visibilité optique 2.

Dans un mode de réalisation particulier, le capteur d'humidité 3 produit un signal de sortie 5 qui fonctionne en tout ou rien, ainsi que le système de détection de visibilité optique 2 dont le signal de sortie 6 fonctionne aussi en tout ou rien, grâce à des comparateurs. Dans ce cas, les signaux d'entrée 5 et 6 sur le circuit de combinaison 4, sont des signaux binaires qui sont composés par un ET logique. De ce fait, le capteur d'humidité 3 et le système de détection de visibilité optique 2 présentent des seuils de basculement prédéterminés de façon à ce que leur combinaison dans le circuit 4 produise un signal de sortie 7 dont l'état actif correspond à une situation réelle de brouillard 13. Le signal de sortie 7 peut être mis en forme dans un circuit d'allumage 8 dont le signal de sortie est émis sur un fil de liaison 9 vers la centrale de gestion 10 de l'éclairage et de la signalisation, dont le signal de sortie 11 commande l'allumage ou l'extinction du feu de brouillard 16.

Dans le cas où le système d'allumage 8 émet un signal de demande 9 vers la centrale 10, il est possible de combiner ce signal 9 avec une commande manuelle d'allumage des feux de brouillard produite par le conducteur. Dans ce cas, la commande manuelle a la priorité.

Dans le cas où le système d'allumage n'est pas relié à une centrale de gestion 10, le signal de sortie 9 est directement fourni au feu 16.

Les niveaux de consigne respectivement pour la détection d'humidité et pour la visibilité optique, sont enregistrés par avance dans le dispositif 1.

Dans un mode de réalisation, les niveaux de consigne varient en fonction de mesures supplémentaires qui peuvent comporter :
- une mesure de la pollution atmosphérique,
- une mesure de la pression atmosphérique,
- une mesure de la température ambiante.

En effet, on a remarqué une relative sensibilité du dispositif quand le degré de pollution, la pression atmosphérique, ou la température ambiante variaient.

Dans un mode de réalisation de l'invention, on utilise donc un circuit permettant le réglage des niveaux de consigne précités en fonction de ces trois paramètres locaux, de façon à réaliser un auto-apprentissage ou une auto-adaptation du dispositif à son environnement.

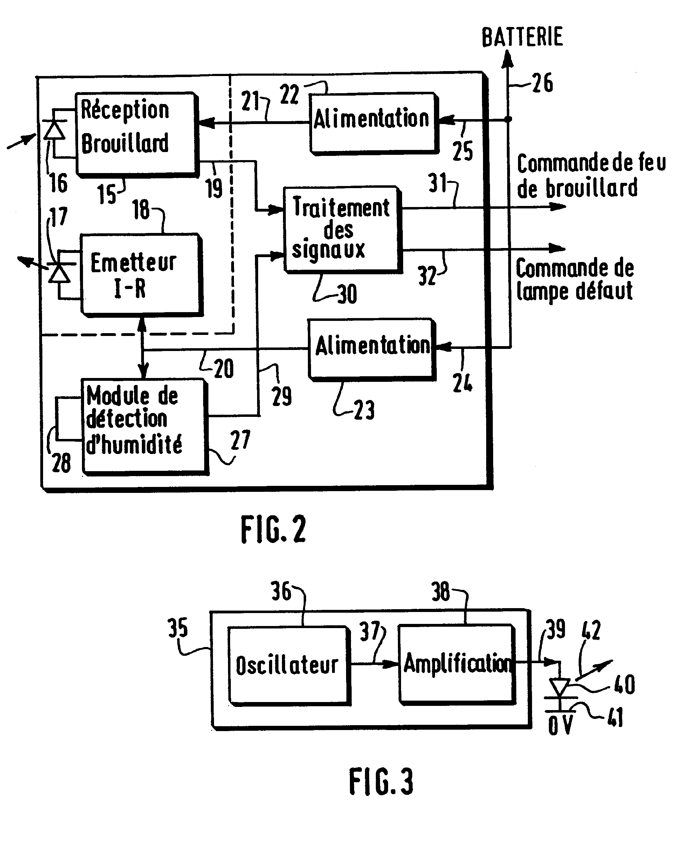

A la figure 2, on a représenté un mode de réalisation préféré d'une partie du dispositif de la figure 1. Le dispositif de détection de la visibilité optique est constitué par un ensemble 15-18 d'émission réception d'un rayonnement infrarouge. Ce dispositif comporte une voie d'émission comprenant un circuit électronique 18 de polarisation d'une diode émettrice d'infrarouges 17.

La partie rétrodiffusée du rayonnement infrarouge émis est détectée par une diode 16 de détection du rayonnement infrarouge qui est connectée aux bornes d'un circuit de réception 15 de signal de détection.

Le circuit de réception 15 reçoit sa propre alimentation par une entrée 21 provenant d'une alimentation régulée 22 connectée par son entrée 25 à la ligne d'alimentation positive 26, par exemple provenant de la batterie du véhicule. Il produit un signal de détection sur un fil de sortie 19 qui est connecté à un circuit de traitement 30 qui sera décrit plus loin.

D'autre part, le dispositif comporte aussi un capteur d'humidité 28 dont le signal de détection est traité par un module de détection d'humidité 27 dont la sortie 29 est connectée au circuit de traitement 30. L'émetteur infrarouge 18 et le module de détection d'humidité 27 sont alimentés en commun par la sortie 20 d'une alimentation régulée 23 connectée par son entrée 24 à la ligne d'alimentation positive 26, par exemple provenant de la batterie du véhicule.

Le circuit de traitement 30 des signaux de détection 19 et 29 produit deux signaux respectivement de commande du feu de brouillard (surun fil de sortie 31) et de commande d'allumage d'une lampe de défaut (sur un fil de sortie 32).

A la figure 3, on a représenté un module émetteur d'infrarouges destiné à un système de détection de visibilité optique selon l'invention. Le module émetteur 35 comporte principalement un circuit oscillateur 36 dont la sortie 37 est transmise à l'entrée d'un circuit amplificateur 38 dont la sortie 39 est connectée à l'anode d'une diode 40 qui émet un rayonnement infrarouge 42.

La cathode de la diode 40 est connectée à un niveau constant de référence 41 comme la tension 0 volt ou la masse du véhicule.

Les caractéristiques du rayonnement 42 sont fixées par la fréquence des oscillations produites par l'oscillateur 36 et par le gain de l'amplificateur 38. Elles peuvent être ajustées en fonction de l'environnement ainsi qu'on l'a décrit plus haut.

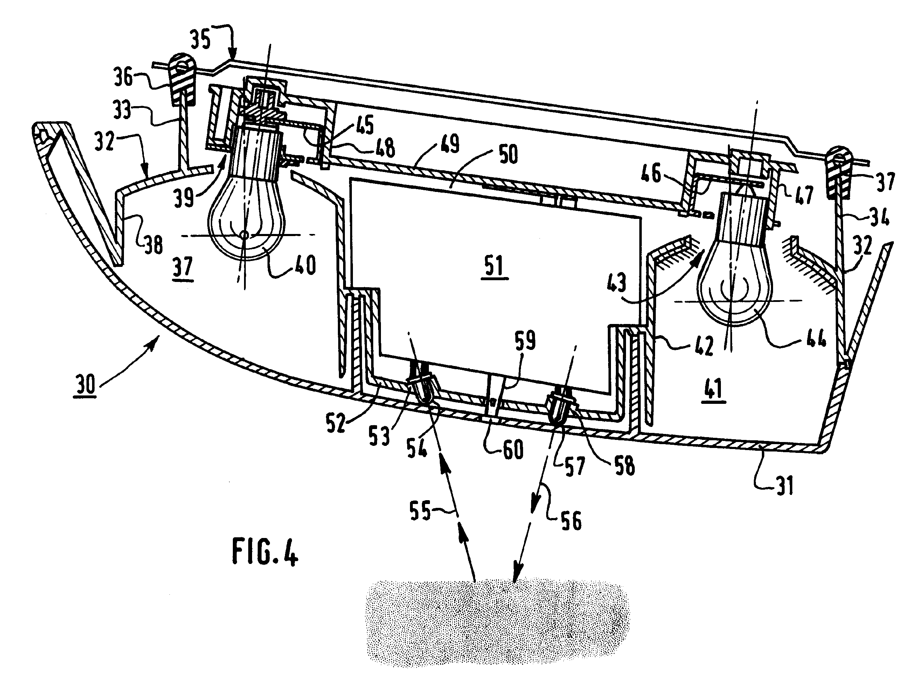

A la figure 4, on a représenté un bloc optique comportant un ensemble de feux de signalisation destinés à être placés à l'arrière d'un véhicule, et équipé d'un dispositif selon l'invention.

Dans d'autres modes de réalisation non représentés, les différentes parties du dispositif de l'invention peuvent être disposées en des endroits différents.

Le bloc optique 30 présente une face avant 31 translucide, au moins partiellement, et qui est fixée sur une face arrière 32. La face arrière 32 comporte des pattes respectivement 33 et 34 de fixation sur la carrosserie 35 du véhicule. Les pattes 33 et 34 sont liées à la carrosserie 35 par des moyens de liaison 36 et 37.

Le feu comporte aussi une première cavité 37 dotée d'une paroi réflectrice 38 à travers un trou 39 de laquelle on introduit une lampe 40 d'éclairage par exemple. De même, il comporte une seconde cavité 41 dotée d'une paroi réflectrice 42 à travers un trou 43 de laquelle on introduit une lampe 44 de brouillard arrière. Les lampes 40 et 44 sont connectées électriquement par des languettes, respectivement 45 et 46, et mécaniquement par des douilles 47 et 48 d'un porte-lampes 49.

Dans l'espace libre 50 entre les deux cavités 37 et 41, on a placé un module électronique 51 réalisé par exemple selon l'enseignement de la figure 2.

Sur la partie du module qui fait vis à vis à la face avant 31 du bloc optique, on a disposé un support 52 percé d'un premier trou 53 à travers lequel passe une diode 54 de réception des infrarouges rétrodiffusés du rayonnement infrarouge 56 émis par une diode émettrice 57 disposée dans un second trou 58 du support 52.

Dans le mode de réalisation de la figure 4, l'inclinaison du rayonnement infrarouge 56, par rapport à l'axe de réception 55 de la diode réceptrice 54, est établie par construction des trous 53 et 58 de façon à ce que ces directions 55 et 56 se coupent à une distance prédéterminée, par exemple de 2 mètres.

Entre les deux trous 53 et 58 du support 52, on dispose un logement ou puits 59 qui débouche sur un perçage 60 de la face avant 31 du bloc optique. Dans le logement ou puits 59, on dispose le capteur d'humidité proprement dit. Dans un mode de réalisation préféré, le puits ou logement 59 est disposé au moins partiellement selon une disposition verticale de façon à déboucher sur la partie supérieure de la face avant 31. Dans le dessin de la figure 4, on n'a pas représenté les différents fils d'alimentation et de liaison des parties de l'invention.

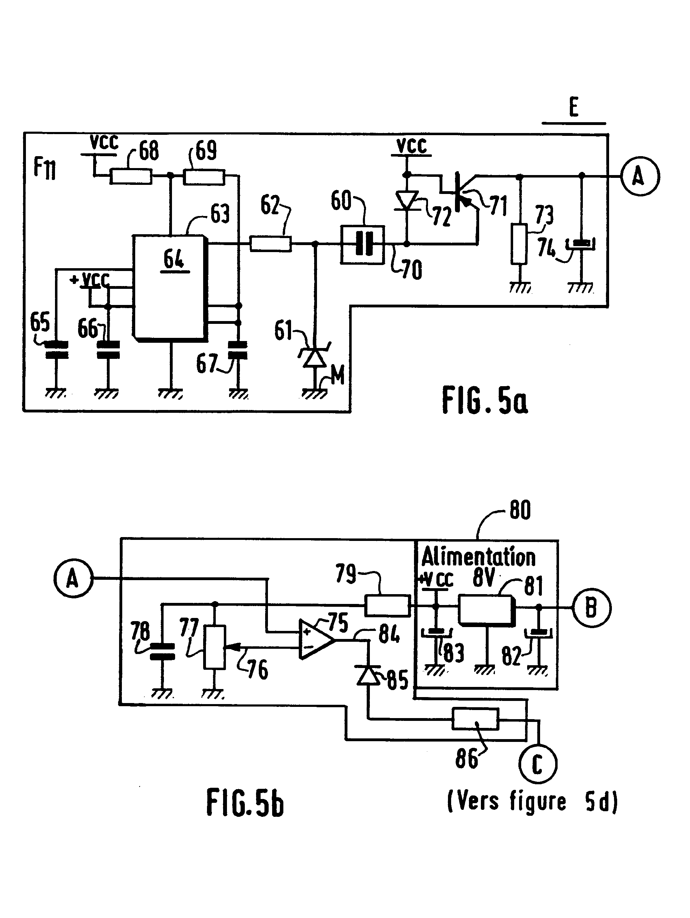

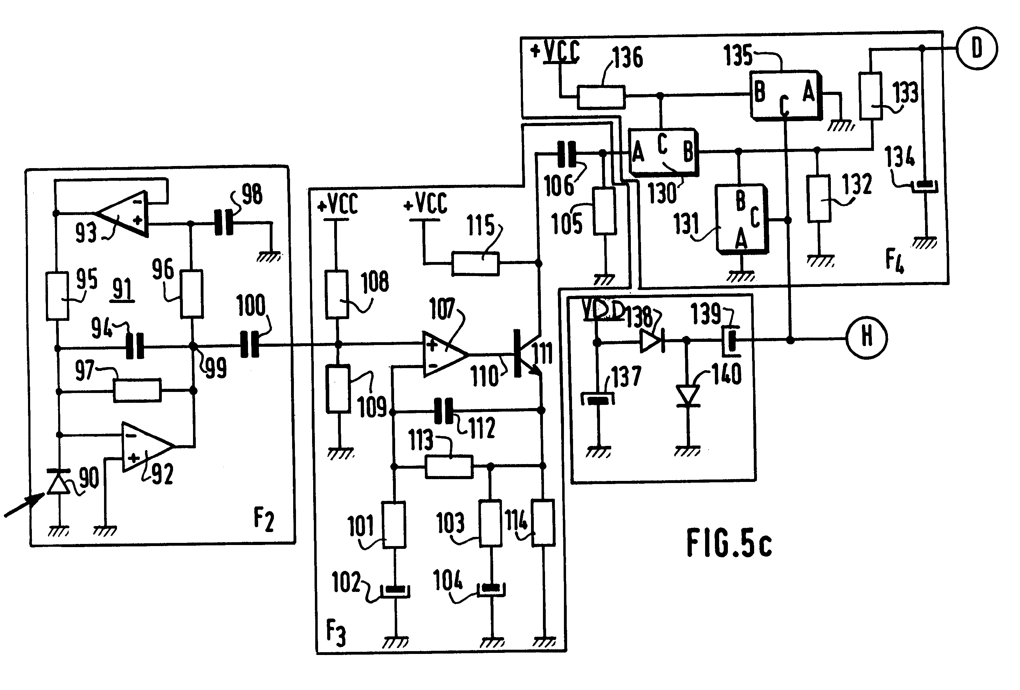

Aux figures 5a et 5b, on a représenté le circuit de détection d'humidité avec son alimentation de référence. Le capteur 60 d'humidité est ici constitué par un film polymère utilisé comme diélectrique d'un condensateur dont la constante diélectrique est sensible à l'humidité ambiante. Un tel capteur à la température ambiante présente une courbe de réponse de la capacité à ses bornes en fonction du pourcentage d'humidité relative dans l'air quasiment linéaire.

Une première borne du capteur 60 est connectée à la cathode d'une diode Zener61 dont l'anode est reliée au plan de masse M. La cathode de la diode 61 est connectée par l'intermédiaire d'une résistance 62 à la sortie 63 d'un circuit intégré oscillateur 64. Le circuit oscillateur 64 est polarisé par l'intermédiaire des condensateurs 65, 66 et 67 ainsi que par des résistances 68 et 69 à la tension continue du montage +Vcc.

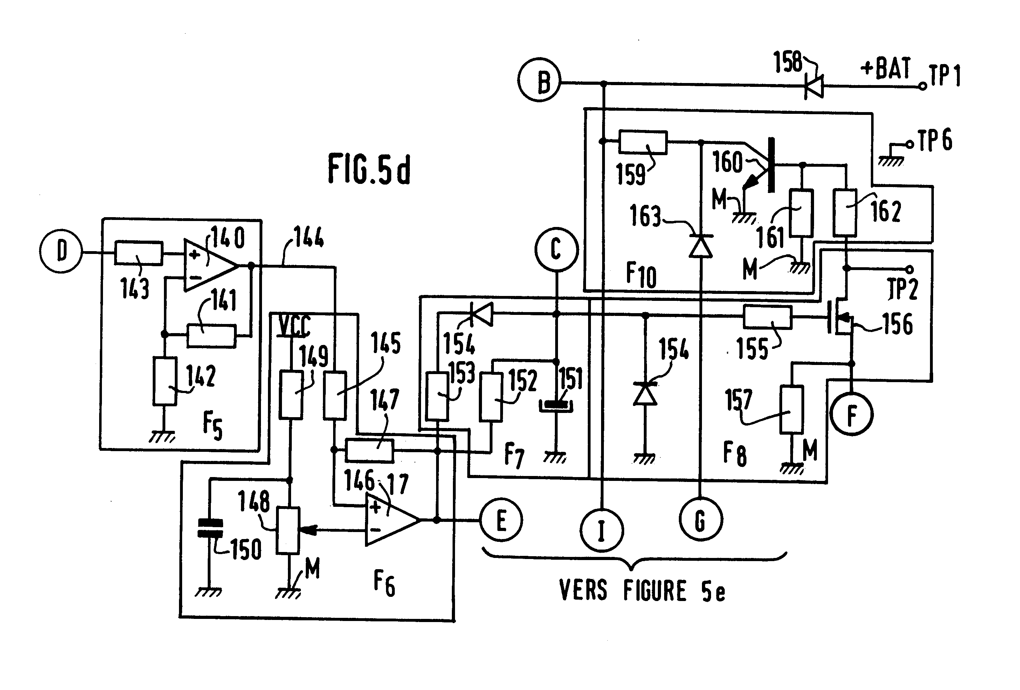

La sortie 63 du circuit intégré 64 permet d'alimenter le capteur 60 par un signal carré de fréquences comprises entre 30 et 300 kHz, et qui dans l'exemple de réalisation préféré est de 30 kHz. L'autre borne 70 du capteur 60 est connectée à travers un transistor 71 dont la base est reliée à l'émetteur par une diode 72, à une charge constituée par un circuit parallèle constitué d'une résistance 73 et d'un condensateur 74. La sortie A de ce circuit est connectée à l'entrée positive (voir figure 5b) d'un amplificateur opérationnel 75 monté en comparateur de tension de référence. L'autre borne négative de l'amplificateur 75 est connectée à la sortie 76 d'un potentiomètre 77, monté en parallèle avec un condensateur 78, et dont le point commun est connecté par l'intermédiaire d'une résistance de charge 79 à un dispositif produisant une tension de référence stabilisée. L'alimentation stabilisée 80 est constituée autour d'un circuit intégré régulateur 81. La sortie du circuit 81, alimentée par une entrée B, est filtrée par un condensateur 82. La sortie VD du circuit 81 sert de référence de tension à travers le condensateur 83. Le point de consigne de détection d'humidité est réglé par le potentiomètre 77. Dans un mode de réalisation, cette valeur de consigne est réglée à une valeur d'humidité relative, proche de la saturation par exemple à 85% d'humidité relative. Quand l'humidité détectée par le capteur 60 dépasse 85%, la sortie 84 du comparateur 75 passe à l'état haut. La sortie 84 est connectée à la cathode d'une diode 85 dont l'anode est connectée à la première borne d'une résistance 86 dont l'autre borne est connectée à une sortie C de la figure 5b. La sortie c sert d'entrée au montage représenté à la figure 5d qui sera décrite plus loin.

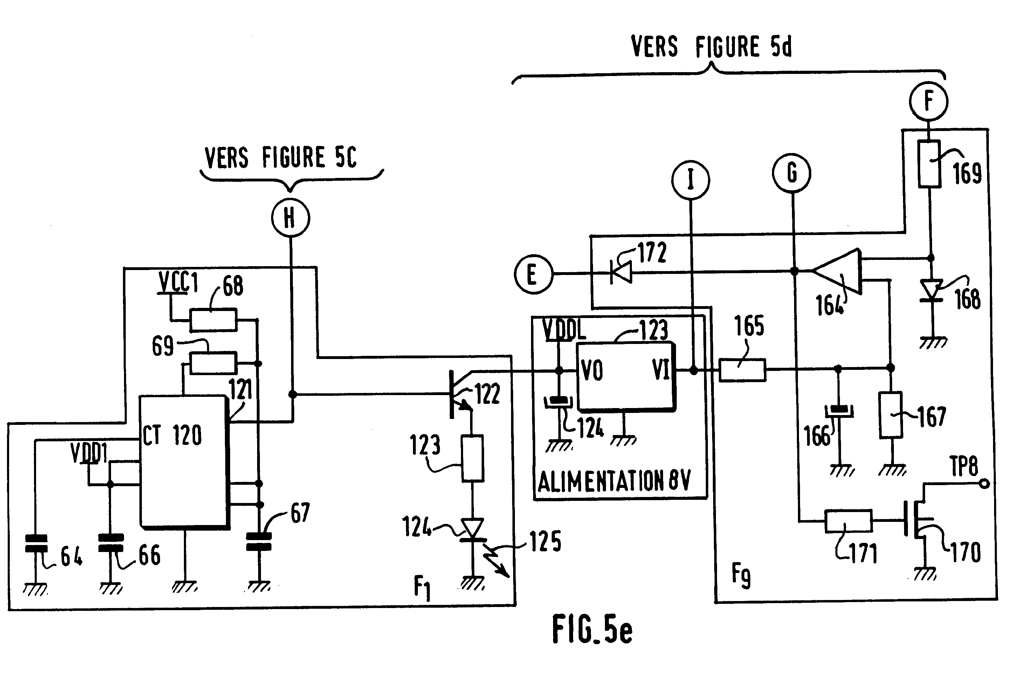

A la figure 5c, on a représenté une cellule F2 comportant la diode réceptrice infrarouge 90. La cathode de la diode est connectée à l'entrée d'un gyrateur 91 composé d'un premier amplificateur 92 et d'un second amplificateur-suiveur 93. Le gain est déterminé par les résistances respectivement 95, 96, et 97. Le montage constitué par le condensateur 94 et la résistance 97 joue le rôle d'un filtre passe bas. Lorsque la diode 90 est éclairée par un signal rétrodiffusé, le signal de sortie sur la borne 99 du gyrateur 91 est proportionnel à l'intensité du signal rétrodiffusé.

Le signal de détection des infrarouges rétrodiffusés est transmis à une cellule de filtrage F3 par l'intermédiaire d'un condensateur de liaison 100. Le module F3 a pour rôle de filtrer les sources parasites telles que :
- la lumière du jour ;
- les phares des véhicules environnants ;
- les éclairages urbains ou le passage dans les tunnels routiers.

Sans la présence du module F3, la réponse du récepteur F2 est modifiée et modifie aussi le rapport si- gnal/bruit. Pour porter remède à ce problème, on utilise une chaîne F3 de cellules de filtrage de type passe-haut constituée par la résistance 101 en série avec le condensateur 102 ; la résistance 103 en série avec le condensateur 104 et la résistance 105 connectée au condensateur 106.

Le signal de détection rétrodiffusé est transmis à l'entrée d'un amplificateur 107. A ce signal on superpose une tension continue fixée par le rapport d'un pont diviseur 108, 109 connecté entre l'alimentation positive +Vcc et la masse.

La sortie 110 de l'amplificateur 107 est transmise à la base d'un transistor 111. Les premières cellules de filtrage 100-104 sont placées dans la boucle de contre-réaction avec le condensateur 112, connectées entre la borne d'entrée négative de l'amplificateur 107 et l'émetteur de transistor 111, par la résistance 113 qui connecte les résistances 101 et 103.

L'émetteur du transistor 111 est connecté à la masse par l'intermédiaire d'une résistance 114.

Le collecteur du transistor 111 est connecté d'une part à l'alimentation positive +Vcc par l'intermédiaire d'une résistance 115, et à l'entrée de la cellule de filtrage 106, 105 qui sert à filtrer les basses fréquences en filtre passe-haut. La sortie du filtre 106, 105, est transmise à l'entrée d'un module F4 qui constitue un filtre à détection synchrone. Ce filtre permet de détecter un signal provenant de la rétrodiffusion du brouillard. Ce signal, puisqu'il provient du rayonnement émis par une autre diode infrarouge peut être détecté en synchronisme avec la production de ce rayonnement infrarouge. A la figure 5e, on a représenté en particulier un module F1 de production d'un rayonnement infrarouge.

Le module comporte un oscillateur 120 constitué par un circuit intégré. Le montage de cet oscillateur est tout à fait semblable à l'oscillateur du module F11 représenté à la figure 5a. Les mêmes éléments, bien que des valeurs différentes portent les mêmes numéros de référence, ils ne seront pas décrits plus avant. La sortie 121 de l'oscillateur 120 est transmise à la base d'un transistor 122 et à la sortie H qui est reliée à l'entrée correspondante précitée de la figure 5c.

Le transistor 122 est alimenté par un potentiel positif produit par une alimentation régulée constituée d'un circuit régulateur 123 dont la sortie VD est transmise aux bornes d'un condensateur 124.

L'émetteur du transistor 122 est connecté à l'anode d'une diode 124 émettrice d'un rayonnement infrarouge 125 par l'intermédiaire d'une résistance 123. La cathode de la diode 124 est connectée à la masse.

En revenant à la figure 5c, l'entrée H reçoit un signal provenant de l'oscillateur et qui sert de référence de synchronisme pour le filtre à détection synchrone F4. Le dispositif comporte un multiplieur du signal de sortie du module F3 (prélevé sur le point commun entre le condensateur 106 et la résistance 105).

Dans le mode de réalisation décrit à la figure 5c, le multiplieur est constitué par trois commutateurs. Un premier commutateur 130 comporte une première borne A qui est connectée au point commun entre le condensateur 105 et la résistance 105, et une seconde borne B connectée d'une part, par une première borne B d'un second commutateur 131 dont l'autre borne A est connectée à la masse, d'autre part, connectée à un circuit constitué par deux résistances, respectivement 132 et 133. La résistance 133 est connectée à une première borne d'un condensateur 134 et à la sortie B du module F4. Le circuit constitué par la résistance 133 et le condensateur 134 constitue un intégrateur qui produit, aux bornes du condensateur 134, une tension continue qui correspond à une tension moyenne d'intégration.

L'entrée H est connectée aux bornes de commande C du second commutateur 131 et d'un troisième commutateur 135. Le troisième commutateur 135 présente une première borne A connectée à la masse, et une seconde borne B connectée, d'une part, à l'entrée de commande C du premier commutateur 130 et, d'autre part, à une borne d'une résistance 136 dont l'autre borne est connectée à l'alimentation positive +Vcc.

Le module F4 réalise une détection synchrone du signal de détection de rétrodiffusion. En ouvrant ou en fermant le commutateur 130, on exécute la multiplication du signal de détection de rétrodiffusion par l'horloge synchrone H. De ce fait, en sortie D du circuit d'intégration 133, 134, on mesure une tension moyenne qui varie comme le cosinus du déphasage entre le signal de détection de rétrodiffusion et le signal de synchronisation H. Cette tension moyenne est maximale quand le déphasage est égal à 0° ou 180°.

La borne d'entrée H du signal de synchronisation est mise en liaison avec un montage constitué par les diodes 138 et 140 et des condensateurs 137 et 139 de façon à produire grâce à ce montage, dit pompe à diodes, une tension de polarisation VDD transmise au reste des circuits électroniques du montage.

A la figure 5d, le signal de sortie D du module F4 est amplifié en composante continue par un amplificateur opératiomel 140 dont le gain est réglé par les résistances 141 de contre-réaction et 142 connectée à la masse. Le signal d'entrée D est connecté par l'intermédiaire d'une résistance 143 à l'entrée positive de l'amplificateur 140.

La sortie de l'amplificateur 140 (module F5) est transmise par l'intermédiaire d'une résistance 145 à la borne d'entrée positive d'un amplificateur opérationnel 146 dont la boucle de réaction positive comporte une résistance 147. La borne négative de l'amplificateur 146 reçoit une valeur de consigne réglée par le potentiomètre 148 connectée entre la masse et la borne d'alimentation positive Vcc par l'intermédiaire d'une résistance 149. Le potentiomètre 148 est monté en parallèle avec un condensateur de filtrage 150. Dans un mode de réalisation, la source de valeur de consigne est réglée sur une valeur prédéterminée obtenue par essais de façon à déclencher le feu de brouillard pour une visibilité de moins de 50 mètres. Dans un autre mode de réalisation, la consigne réglée sur le potentiomètre 148 est ajustée en fonction des conditions extérieures comme :
- le degré de pollution,
- la pression atmosphérique, et
- la température ambiante.

Le montage F6 fonctionne comme un comparateur dont la sortie E est active quand la tension détectée sur la diode infrarouge 90 dépasse la valeur de consigne prédéterminée.

De façon à éviter les allumages ou extinctions intempestifs du feu de brouillard, on dispose sur la sortie du comparateur F6, un module F7 de temporisation. Le module F7 comporte principalement un condensateur 151 dont une première borne est connectée à la masse et dont l'autre borne est connectée d'une part à une première résistance 152, et à un circuit série constitué d'une résistance 153 et d'une diode 154. Le point commun entre le condensateur 151, la résistance 152 et l'anode de la diode 154 est connectée à une entrée C. L'entrée C (voir figure 5d) est connectée à l'anode d'une diode 85 par l'intermédiaire d'une résistance 86. De ce fait, la sortie 84 du circuit de détection de l'humidité relative F11 est combinée par un ET logique avec le signal de comparaison E de visibilité.

Le point commun précité est transmis à un module F8 comportant une diode 154 dont l'anode est connectée par l'intermédiaire d'une résistance 155 à la grille d'un transistor de puissance 156. Le drain du transistor 156 est connecté à une borne TP2 de la lampe du feu de brouillard, tandis que la source est connectée par l'intermédiaire d'une résistance 157 au plan de masse M.

Le drain du transistor de puissance 15 est connecté par l'intermédiaire d'un module F10 qui sera décrit plus loin, à la cathode d'une diode 158 dont l'anode est connectée à une borne TP1 reliée à la borne positive de la batterie.

Quand l'une ou l'autre des deux conditions de visibilité et d'humidité relative n'est pas satisfaite, le transistor 156 est bloqué. De ce fait, le courant ne circule pas dans la résistance 157 vers la masse. Dans ce cas, le feu de brouillard est éteint.

Quand les deux conditions sont vérifiées, le transistor 156 est saturé et la lampe du feu de brouillard s'allume.

On va maintenant décrire les modules F9 et F10 aux figures 5e et 5d. Cette partie du module électronique sert à signaler un défaut quand un incident arrive sur la lampe du feu de brouillard. Dans ce cas, la lampe peut être grillée. Une lampe témoin est alors commandée, par exemple sur le tableau de bord du véhicule.

Le module F10 comporte une première résistance 159 connectée à une borne 1 d'une part et à la cathode de la diode 158 d'autre part. L'autre borne de la résistance 159 est connectée au collecteur d'un transistor 160 dont l'émetteur est connecté à la masse M. La base du transistor 160 est connectée d'une part à la masse M par l'intermédiaire d'une résistance 161 et d'autre part à la borne TP2 d'alimentation de la lampe du feu de brouillard par l'intermédiaire d'une résistance 162.

D'autre part, le module F10 est connecté par l'intermédiaire d'une diode 163 dont l'anode est connectée à une entrée G du module F9.

La borne de liaison 1 précitée du module F10 est connectée à la borne VI du circuit régulateur 123 décrit plus haut ainsi qu'à une entrée de comparaison d'un comparateur 164 par l'intermédiaire d'une résistance 165 connectée à un circuit parallèle composé d'un condensateur 166 et d'une résistance 167. L'entrée négative du comparateur 164 est connectée au point commun entre l'anode d'une diode 168 et une borne d'une résistance 169. L'autre borne de la résistance 169 est connectée à la borne de liaison F vers le module F8 de la figure 5D.

La sortie du comparateur 164 commande la commutation d'un transistor de puissance 170 dont le drain est connecté à une borne TP8 d'allumage ou d'extinction d'une lampe de signalisation de défaut. A cet effet, la sortie du comparateur 164 est connectée à la grille du transistor 170 par l'intermédiaire d'une résistance 171. D'autre part, la sortie du comparateur 164 est connectée tout d'abord par une borne de liaison G au module F10 de la figure 5d et d'autre part, par la borne de liaison E au module F6 de la figure 5d par l'intermédiaire d'une diode 172.

Lorsqu'il n'y a pas de brouillard, le transistor 156 est bloqué et le courant ne circule pas dans la résistance 157. De ce fait, la sortie du comparateur 164 est à l'état haut. Mais comme le transistor 160 est saturé, et que le comparateur 146 du module F6 est à l'état bas, la sortie du comparateur 164 est forcée à l'état bas par l'intermédiaire des diodes 172 et 163.

De ce fait, le transistor 170 ne pourra jamais se saturer quand il n'y pas de brouillard et, de ce fait, la lampe de signalisation de défaut ne pourra pas s'allumer.

Au contraire, quand le module détecte du brouillard, le transistor 156 se sature et le courant passe dans la résistance 157 vers la masse. La sortie du comparateur 164 passe donc à O volt. Les diodes 163 et 172 se comportent comme des circuits ouverts. Dans ce cas, si la lampe du feu de brouillard se coupe (cas d'une lampe grillée) la sortie du comparateur 164 bascule à l'état haut. Le transistor 170 se sature et la lampe de signalisation de défaut connectée à la borne TP8 s'allume.

## Revendications

1. Dispositif d'éclairage et/ou de signalisation utilisable en situation de brouillard, caractérisé en ce qu'il comporte un circuit de combinaison (4) dont une première entrée (5) est connectée à la sortie d'un dispositif (3) de détection d'humidité relative, et dont une seconde entrée (6) est connectée à la sortie d'un dispositif (2) de détection de visibilité, les deux signaux de détection étant combinés de façon à produire un ordre d'allumage (9) et/ou d'extinction d'au moins un feu de brouillard.

2. Dispositif selon la revendication 1, caractérisé en ce que l'ordre d'allumage et/ou d'extinction est produit par un circuit d'allumage (8) et/ou une centrale de gestion (10) de l'éclairage et/ou de la signalisation.

3. Dispositif selon la revendication 1 ou 2, caractérisé en ce que le dispositif de détection de visibilité comporte un émetteur (18) connecté aux bornes d'une diode (17) d'émission d'infrarouges et un récepteur (15) du rayonnement infrarouge rétrodiffusé reçu par une diode (16) de réception de rayonnement infrarouge.

4. Dispositif selon la revendication 3, caractérisé en ce que les diodes de réception (54) et d'émission (57) sont disposées selon une inclinaison prédéterminée de façon à ce que les faisceaux de réception et d'émission se coupent à une distance donnée.

5. Dispositif selon la revendication 1 ou 2, caractérisé en ce que le dispositif de détection d'humidité relative comporte un capteur d'humidité (28) disposé dans un logement ou puits qui débouche dans l'atmosphère ambiante à proximité du dispositif de détection de visibilité (15 - 19).

6. Dispositif selon l'une des revendications précédentes, caractérisé en ce qu'il est intégré dans un bloc optique.

7. Dispositif selon l'une des revendications précédentes, caractérisé en ce que le dispositif de détection d'humidité comporte un capteur constitué par un condensateur (60), dont la constante diélectrique dépend de l'humidité relative et qui est alimenté par un générateur d'oscillations de période prédéterminée, et en ce que le signal de sortie (70) du capteur (60) est comparé au moyen d'un comparateur (75) à une valeur de consigne (76) de valeur prédéterminée, enregistrée ou adaptée en fonction de conditions externes mesurées par un circuit comme le degré de pollution, la température ambiante ou la pression atmosphérique.

8. Dispositif selon la revendication 3 ou 4, caractérisé en ce qu'il comporte une diode (124) émettrice d'un rayonnement infrarouge connectée par l'intermédiaire d'un amplificateur (122) à une source d'oscillations (120) de période prédéterminée, qui est aussi connectée par une borne (H) à un module (F4) de détection synchrone dont l'entrée reçoit le signal de détection de rétrodiffusion obtenu à l'aide d'une diode (90) de réception infrarouge connectée à l'entrée d'un gyrateur (91), la sortie (D) du module de détection synchrone (F4) étant connectée à un comparateur (146) à une valeur de consigne (148) de valeur prédéterminée, enregistrée ou adaptée en fonction de conditions externes mesurées par un circuit comme le degré de pollution, la température ambiante ou la pression atmosphérique.

9. Dispositif selon la revendication 7 ou 8, caractérisé en ce que les signaux de comparaison (84, E) sont combinés par une diode (85), la combinaison étant fournie comme signal de commande à la grille d'un transistor de puissance (156) dont le drain est connecté à une borne d'alimentation (TP2) d'un feu de brouillard et dont la source est connectée à la masse par l'intermédiaire d'une résistance (157).

10. Dispositif selon la revendication 9, caractérisé en ce qu'il comporte des modules (F9, F10) de détection d'un défaut de la lampe du feu de brouillard constitués par un comparateur (164) connecté d'une part à la source du transistor de puissance (156) par l'intermédiaire de la résistance (169) d'autre part, à un circuit constitué d'un condensateur (166) et d'une résistance (167) et dont la sortie est en l'absence de défaut forcée à l'état bas par l'intermédiaire d'une diode (172) connectée à la borne E de sortie de comparaison de comparateur (146) d'une part, et d'autre part, par une diode (163) au collecteur d'un transistor (160) dont la base est connectée par l'intermédiaire d'une résistance (162) à la borne d'alimentation (TP2) d'allumage de la lampe du feu de brouillard, la sortie du comparateur (164) étant connectée par l'intermédiaire d'une résistance (171) à la grille d'un transistor (170) dont le drain est connecté à la borne (TP8) d'allumage d'une lampe de signalisation de défaut, de façon à ce que cette lampe s'allume lorsque le dispositif détecte une condition de brouillard et que la lampe du feu de brouillard est éteinte.
